# EUROPEAN PATENT APPLICATION

(11) **EP 3 933 366 A1**
(43) Date of publication of application: **05.01.2022**
(21) Application number: 20762435.4
(22) Date of filing: 13.02.2020
(51) Int. Cl.: G01L 9/00, G01L 19/04

(54) **PRESSURE SENSOR**

(30) Priority: 25.02.2019 JP 2019031875
(71) Applicant: TDK Corporation, Tokyo 103-6128 (JP)
(72) Inventor: SASAHARA, Tetsuya, Tokyo 103-6128 (JP)
(74) Representative: Epping - Hermann - Fischer
(86) International application number: PCT/JP2020/005579
(87) International publication number: WO 2020/175155

(57) **Abstract**

[Problem] To provide a pressure sensor which can accurately perform temperature detection or temperature correction and is advantageous in terms of size reduction. [Solution] Provided is a pressure sensor having: a membrane that is deformed according to pressure; a first resistor group that includes, on the membrane, a first resistor and a third resistor arranged at a first distortion position causing predetermined distortion characteristics, and a second resistor and a fourth resistor arranged at a second distortion position at which distortion characteristics are different from the first distortion position, and that forms a bridge circuit to detect the distortion; and a second resistor group that includes a first temperature detection resistor disposed at the first distortion position and a second temperature detection resistor disposed at the second distortion position, and detects the temperature.

## Description

### Technical Field

The present invention relates to a pressure sensor that detects a strain due to deformation of a membrane by resistance change.

### Background

There is a known pressure sensor utilizing the piezoresistive effect to detect a strain of a membrane (also referred to as a diaphragm) by resistance change. In such a pressure sensor, for example, a membrane that is elastically deformed by receiving pressure is formed on a part of a metal pressure receiving member called a stem, and a strain due to a deformation of the membrane is detected by a resistance change of a resistor disposed on the membrane.

The resistance change of the resistor formed on the membrane has temperature dependence. Thus, when such a pressure sensor is installed in an environment where the temperature change occurs, it is necessary to correct the temperature by a method of, for example, separately detecting the temperature information so as to calculate the pressure from a detected resistance change. To be able to measure the temperature at the same time as the pressure, a pressure sensor with a temperature measuring element is also proposed.

For conventional pressure sensors with a temperature detection function, there is a proposed technique in which a temperature measuring element or the like is provided at a position that is not affected by strain due to deformation of the membrane, such as the vicinity of the periphery of a stem or membrane (diaphragm) and a substrate. In such a technique, the temperature can be detected with a temperature measuring element by disposing it at a position that is not affected by strain due to deformation of the membrane or a position in which the output change due to temperature change is sufficiently larger than that due to strain.

### Prior Arts

### Patent Document

Patent Document 1: JPH1194667 (A)

### Summary of Invention

### Problems to be solved by Invention

In the conventional technique of disposing an element for temperature detection in the vicinity of the periphery of the membrane, however, a region in which a temperature measuring element can be arranged and no influence receives from strain is required in the vicinity of the periphery of the membrane. As a result, the configuration of the membrane and the stem is restricted, which may hinder the miniaturization of the pressure sensor. Moreover, since it is necessary to dispose the element for temperature detection at a position that is not affected by strain, there may be a problem that the temperature conditions at an arrangement position of the element for temperature detection is deviated from those at an arrangement position of the element for pressure measurement.

The present invention has been achieved under such circumstances. It is an object of the invention to provide a pressure sensor that can accurately detect the temperature or correct the temperature and is advantageous for miniaturization.

### Means for solving the Problem

To solve the above object, a pressure sensor according to a first aspect of the present invention comprises:
a membrane configured to produce deformation corresponding to pressure;
a first resistor group including a first resistor and a third resistor arranged at a first strain position where a predetermined strain characteristic occurs on the membrane and a second resistor and a fourth resistor arranged at a second strain position where a strain characteristic different from that at the first strain position occurs and configured to detect strain by forming a bridge circuit, and
a second resistor group including a first temperature detection resistor disposed at the first strain position and a second temperature detection resistor disposed at the second strain position and configured to detect temperature.

In the pressure sensor according to the first aspect of the present invention, similarly to the first resistor group configured to detect strain by forming a bridge circuit, the second resistor group configured to detect temperature includes a resistor disposed at the first strain position (first temperature detection resistor) and a resistor disposed at the second strain position (second temperature detection resistor). In such a pressure sensor, the temperature conditions at an arrangement position of a resistor for temperature detection are the same as or very close to those at an arrangement position of the resistor for pressure detection. Thus, such a pressure sensor can accurately measure the temperature of the fluid to be measured for pressure and can accurately correct the temperature for the output of the first resistor group. In addition, such a pressure sensor is advantageous for miniaturization. This is because it is unnecessary to provide a region for disposing the resistor for temperature detection at a position near the periphery of the membrane.

A pressure sensor according to a second aspect of the present invention comprises:
a membrane configured to produce deformation corresponding to pressure;
a first resistor group disposed on the membrane and configured to form a bridge circuit; and
a second resistor group including a first temperature detection resistor disposed at a first strain position where a predetermined strain characteristic occurs in the membrane and a second temperature detection resistor disposed at a second strain position where a strain characteristic in a cancellation relation with the strain characteristic at the first strain position occurs and connected in series to the first temperature detection resistor.

In the pressure sensor according to the second aspect of the present invention, the first temperature detection resistor and the second temperature detection resistor are arranged at positions that generate strain characteristics canceling each other and are connected in series to each other. The influence of strain of the membrane is removed from the output of the second resistor group with such a configuration. Thus, the second resistor group can accurately detect the temperature. Since the first temperature detection resistor and the second temperature detection resistor are arranged at positions where strain occurs on the membrane, such a pressure sensor is advantageous for miniaturization. The first resistor group configured to form a bridge circuit detects strain and pressure of the membrane. In such a pressure sensor, similarly to an element for pressure measurement, an element for temperature detection is disposed in a region where strain occurs on the membrane, and the temperature conditions at the arrangement position of the element for temperature detection are thereby close to those at the arrangement position of the element for pressure measurement. Thus, the pressure sensor according to the present invention can accurately measure the temperature of the fluid to be measured for pressure and can accurately correct the temperature for the output of the first resistor group.

In the pressure sensor according to the second aspect, for example, the first resistor group may include a first resistor and a third resistor arranged at the first strain position and a second resistor and a fourth resistor arranged at the second strain position.

In such a pressure sensor, similarly to the second resistor group configured to detect temperature, the first resistor group configured to detect pressure includes resistors arranged at the first strain position (the first resistor and the third resistor) and resistors arranged at the second strain position (the second resistor and the fourth resistor). Thus, since the temperature conditions at the arrangement position of the element for temperature detection are the same as or very close to those at the arrangement position of the element for pressure measurement, such a pressure sensor can accurately measure the temperature of the fluid to be measured for pressure and can accurately correct the temperature for the output of the first resistor group.

For example, the pressure sensor according to the present invention may comprise a substrate portion independent from the membrane,
wherein the resistors included in the first resistor group may be electrically connected via a substrate wiring included in the substrate portion.

The resistors included in the first resistor group forming a bridge circuit may be connected by an electrode portion and a conductor arranged on the membrane, but may electrically be connected via the substrate wiring independent from the membrane. The membrane can be downsized by wiring using a substrate. In addition, the wiring structure on the membrane can be simplified, and such a pressure sensor is thereby favorable in productivity.

For example, the pressure sensor according to the present invention may comprise:
a first electrode portion disposed on the membrane and connected to the first resistor group;
a second electrode portion disposed on the membrane and connected to the second resistor group; and
a wiring connecting between the first electrode portion and the second electrode portion.

In such a pressure sensor, the wirings for the first resistor group and the second resistor group are at least partly commonized. Thus, such a pressure sensor can simplify the wirings for the first resistor group and the second resistor group.

### Brief Description of the Drawings

FIG. 1 is a schematic cross-sectional view of a pressure sensor according to First Embodiment of the present invention;
FIG. 2 is a conceptual diagram illustrating an arrangement of resistors and electrode portions in the pressure sensor according to First Embodiment;
FIG. 3 is a conceptual diagram illustrating an example (first configuration example) of a circuit formed in the pressure sensor according to First Embodiment;
FIG. 4 is a conceptual diagram illustrating an example (second configuration example) of a circuit formed in the pressure sensor according to First Embodiment;
FIG. 5 is an example of an equivalent circuit diagram of the pressure sensor according to First Embodiment;
FIG. 6 is a conceptual diagram illustrating an arrangement of resistors and electrode portions in a pressure sensor according to Second Embodiment;
FIG. 7 is a conceptual diagram illustrating an example (third configuration example) of a circuit formed using the pressure sensor according to Second Embodiment;
FIG. 8 is a conceptual diagram illustrating an example (fourth configuration example) of a circuit formed using the pressure sensor according to Second Embodiment;
FIG. 9 is a conceptual diagram illustrating an arrangement and a wiring state of resistors and electrode portions in a pressure sensor according to Third Embodiment;
FIG. 10 is a conceptual diagram illustrating an example (fifth configuration example) of a circuit formed using the pressure sensor according to Third Embodiment;
FIG. 11 is a conceptual diagram illustrating an example (sixth configuration example) of a circuit formed using the pressure sensor according to Third Embodiment;
FIG. 12 is a conceptual diagram illustrating an arrangement and a wiring state of resistors and electrode portions in a pressure sensor according to Fourth Embodiment;
FIG. 13 is a conceptual diagram illustrating an example (seventh configuration example) of a circuit formed using the pressure sensor according to Fourth Embodiment; and
FIG. 14 is a conceptual diagram illustrating an example (eighth configuration example) of a circuit formed using the pressure sensor according to Fourth Embodiment.

### Detailed Description of Invention

Hereinafter, the present invention is described based on the embodiments shown in the figures.

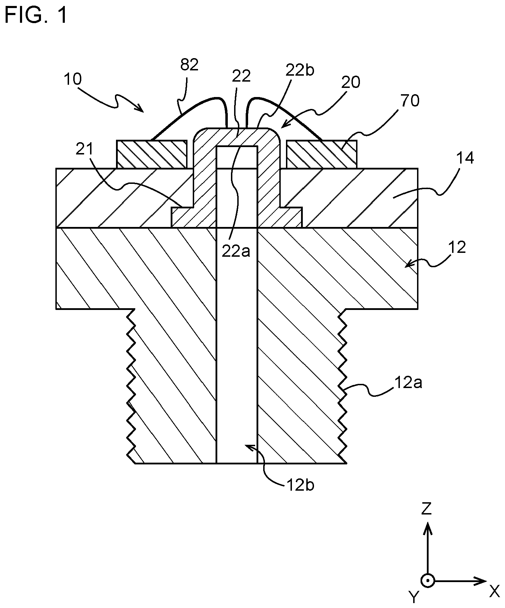

FIG. 1 is a schematic cross-sectional view of a pressure sensor 10 according to the present invention. The pressure sensor 10 includes a stem 20 having a membrane 22, a connection member 12 provided with a passage 12b for transmitting pressure to the stem 20, a holding member 14 for fixing the stem 20 to the connection member 12, and a substrate portion 70 wired to an electrode portion on the membrane 22, and the like.

As shown in FIG. 1, a screw groove 12a for fixing the pressure sensor 10 to a measurement target is formed on the outer periphery of the connection member 12. Since the pressure sensor 10 is fixed by the screw groove 12a, the passage 12b formed inside the connection member 12 airtightly communicates with a pressure chamber as the measurement target.

As shown in FIG. 1, the stem 20 has a bottomed (upper bottom) tubular outer shape and is disposed at one end of the passage 12b of the connection member 12. The stem 20 is provided with a flange portion 21 on the opening side and is fixed to the connection member 12 by sandwiching the flange portion 21 between the holding member 14 and the connection member 12. The opening of the stem 20 and the passage 12b of the connection member 12 are airtightly connected using the holding member 14, and the pressure to be measured is transmitted to the membrane 22 of the stem 20.

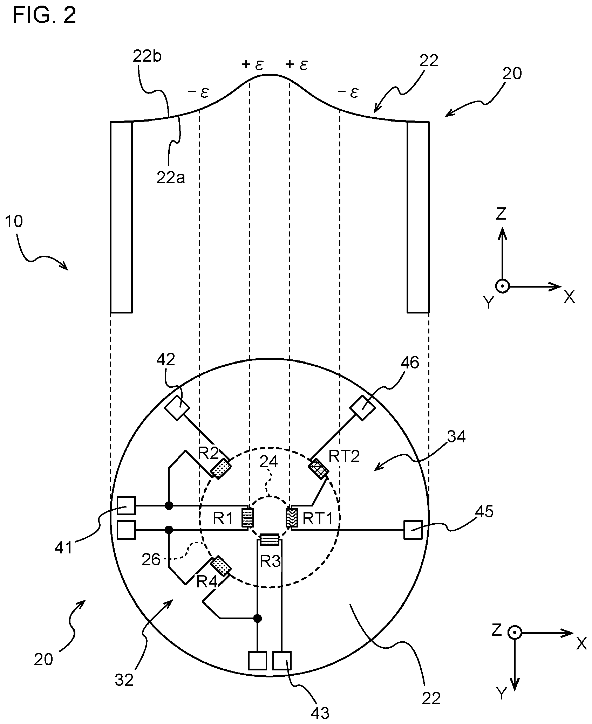

The membrane 22 is disposed on the upper bottom of the stem 20. The membrane 22 is thinner than other parts of the stem 20, such as the side wall, and is deformed corresponding to the pressure transmitted from the passage 12b. The membrane 22 includes an inner surface 22a configured to contact with a pressure fluid and an outer surface 22b opposite to the inner surface 22a. A first resistor group 32, a second resistor group 34 (see FIG. 2), electrode portions, and the like are arranged on the outer surface 22b side of the membrane 22.

The substrate portion 70 having, for example, a wiring and an electrode portion electrically connected to the resistor groups 32 and 34 formed on the outer surface 22b of the membrane 22 is fixed to the holding member 14. The electrode portion of the substrate portion 70 and the electrode portions on the membrane 22 are electrically connected via, for example, a connection wiring 82 formed by wire bonding or so. The substrate portion 70 has a ring outer shape. The stem 20 inserts a through hole formed at the center of the substrate portion 70.

FIG. 2 is a conceptual diagram illustrating an arrangement state of the first resistor group 32, the second resistor group 34, and the like on the outer surface 22b of the membrane 22. The upper part of FIG. 2 is a schematic cross-sectional view of the stem 20, and the lower part of FIG. 2 is a schematic plan view of the stem 20 viewed from the positive side in the Z-axis direction, which is the outer surface 22b side of the membrane 22.

As shown in FIG. 2, the first resistor group 32 including a first resistor R1, a second resistor R2, a third resistor R3, and a fourth resistor R4, which are resistors for detecting strain, and the second resistor group 34 including a first temperature detection resistor RT1 and a second temperature detection resistor RT2, which are resistors for detecting temperature, are provided on the outer surface 22b of the membrane 22. The resistors R1-R4, RT1, and RT2 are separately arranged on a first circumference 24, which is a first strain position that produces a predetermined strain characteristic responding to the pressure applied to the inner surface 22a of the membrane 22, and a second circumference 26, which is a second strain position that produces a strain characteristic different from that at the first strain position.

The first to fourth resistors R1-R4 included in the first resistor group 32 and the first and second temperature detection resistors RT1 and RT2 included in the second resistor group 34 may be resistors made of the same material and having the same structure or may be resistors made of different materials and having different structures. For example, the first to fourth resistors R1-R4 may have a higher strain dependence of resistance values than that of the first and second temperature detection resistors RT1 and RT2. Moreover, the first and second temperature detection resistors RT1 and RT2 may have a higher temperature dependence of resistance values than that of the first to fourth resistors R1-R4.

As shown in FIG. 2, the first circumference 24 is a circumference of a circle having a radius smaller than that of the second circumference 26. For example, when the membrane 22 receives a predetermined positive pressure from the inner surface 22a, a positive strain + ε (tensile strain) is generated on the first circumference 24, but a negative strain - ε (compressive strain) is generated on the second circumference 26. Preferably, the strain characteristic on the first circumference 24 (the first strain position) and the strain characteristic on the second circumference 26 (the second strain position) are in opposite directions (relation canceling each other).

Among the resistors R1-R4, RT1, and RT2 arranged on the membrane 22, the first and third resistors R1 and R3 of the first resistor group 32 and the first temperature detection resistor RT1 of the second resistor group 34 are arranged on the first circumference 24. On the other hand, the second and fourth resistors R2 and R4 of the first resistor group 32 and the second temperature detection resistor RT2 of the second resistor group 34 are arranged on the second circumference 26.

A plurality of electrode portions connected to the first and second resistor groups 32 and 34 is provided on the outer surface 22b of the membrane 22. The electrode portions include first electrode portions 41, 42, and 43 connected to the first resistor group 32, such as the first electrode portion 41 connected to the first resistor R1, the first electrode portion 42 connected to the second resistor R2, and the first electrode portion 43 connected to the third resistor R3, and second electrode portions 45 and 46 connected to the second resistor group 34, such as the second electrode portion 45 connected to the first temperature detection resistor RT1 and the second electrode portion 46 connected to the second temperature detection resistor RT2.

The electrode portions 41, 42, 43, 45, and 46 are provided so as to form wirings for connecting the electrode portions on the membrane 22 or the electrode portions of the membrane 22 and the electrode portion of the substrate portion 70. The number of electrode portions 41, 42, 43, 45, and 46 is not limited. For example, two electrode portions 41, 42, 43, 45, and 46 may be provided for each of the resistors R1-R4, RT1, and RT2. As shown in FIG. 2, the resistor to which only one electrode portion 41, 42, 43, 45, and 46 is connected or the resistor to which the electrode portion 41, 42, 43, 45, and 46 is not directly connected may be disposed on the membrane 22. As shown in FIG. 2, the resistors R1-R4, RT1, and RT2 arranged on the membrane 22 may be wired via the electrode portions 41, 42, 43, 45, and 46 or may be wired without the electrode portions 41, 42, 43, 45, and 46.

The electrode portions 41, 42, 43, 45, and 46 are conducted with the corresponding resistors R1-R4, RT1, and RT2, and conducting wires for wiring to the corresponding resistors R1-R4, RT1, and RT2 can be fixed to the electrode portions 41, 42, 43, 45, and 46. The electrode portions 41, 42, 43, 45, and 46 are formed along a circumference having a radius larger than that of the second circumference 26. This facilitates wiring from the electrode portions 41, 42, 43, 45, and 46 to the substrate portion 70. However, the electrode portions 41, 42, 43, 45, and 46 are arranged in any manner and can be arranged with various shapes on the membrane 22.

The stem 20 having the membrane 22 as shown in FIG. 2 and the resistor groups 32 and 34 and the electrode portions 41, 42, 43, 45, and 46 arranged on the membrane 22 are manufactured, for example, as follows. First, the stem 20 having the membrane 22 is manufactured by machining. The stem 20 is made of any material that generates an appropriate elastic deformation and is made of, for example, metals or alloys, such as stainless steel.

Next, a semiconductor thin film or a metal thin film is formed on the membrane 22 with an insulating film interposed therebetween, and the resistor groups 32 and 34 and the electrode portions 41, 42, 43, 45, and 46 as shown in FIG. 2 are formed by subjecting this thin film to laser processing, fine processing with semiconductor processing technique, such as screen printing, or the like. If necessary, an insulating surface layer may be formed on a portion other than the electrode portions 41, 42, 43, 45, and 46, such as the resistor groups 32 and 34 and the wiring portion between the resistor groups 32 and 34 and the electrode portions 41, 42, 43, 45, and 46.

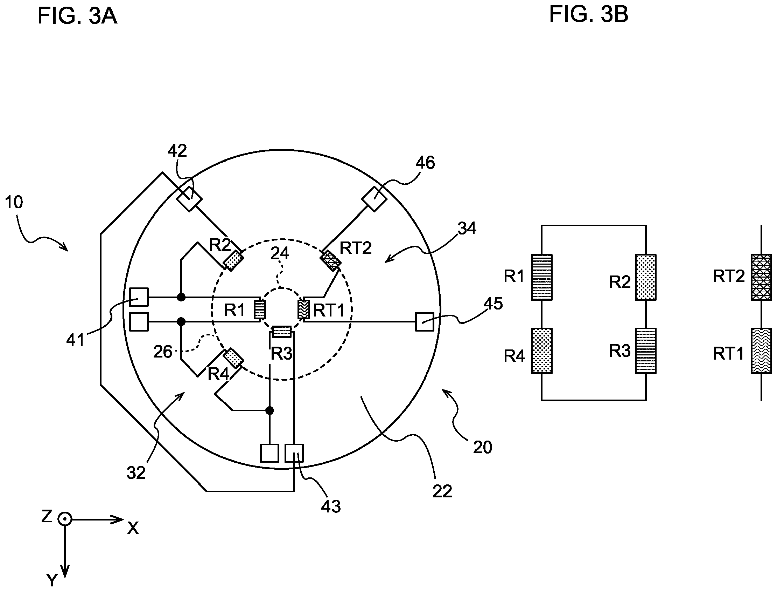

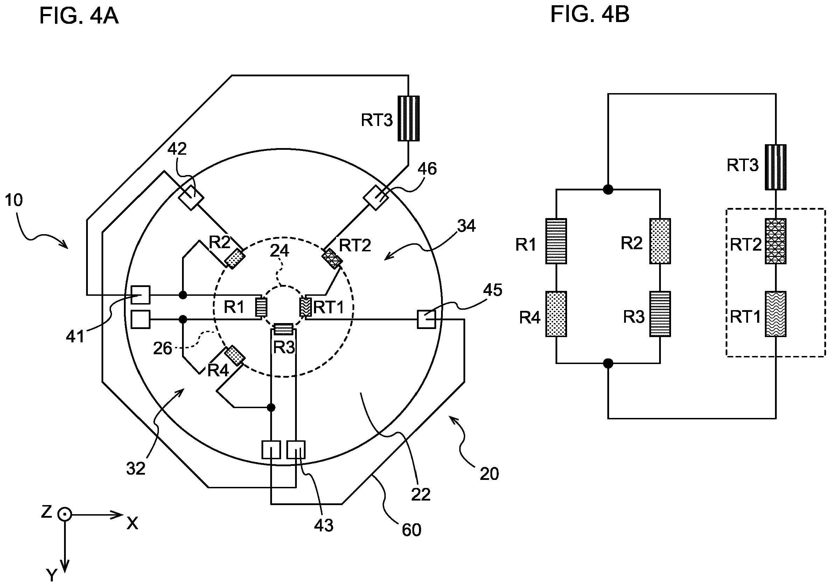

In the manufacture of the pressure sensor 10, a circuit for detecting strain is formed by electrically connecting the resistors R1-R4 included in the first resistor group 32 to form a bridge circuit. The resistors R1-R4 may be connected via the electrode portions 41, 42, and 43 and wirings connecting the electrode portions 41, 42, and 43 or may be connected with a conductor pattern formed on the membrane 22 by a semiconductor manufacturing process or so. Specific examples of the connection are described below with FIG. 3 and FIG. 4.

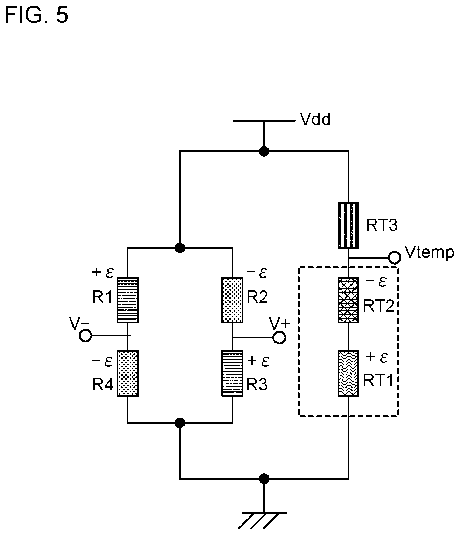

FIG. 5 is an example of an equivalent circuit for pressure and temperature detection formed using the pressure sensor 10 shown in FIG. 2. As shown in FIG. 5, the pressure sensor 10 detects deformation (strain) of the membrane 22 by connecting the first to fourth resistors R1-R4 to form a Wheatstone bridge. The number of resistors included in the bridge circuit is not limited to four. The bridge circuit may be formed with five or more resistors including, for example, a correction resistor that corrects manufacturing variations of resistance values.

In the manufacture of the pressure sensor 10, the first temperature detection resistor RT1 and the second temperature detection resistor RT2 included in the second resistor group 34 are connected in series to form a circuit for detecting temperature. In the example shown in FIG. 5, changes in the resistance values of the first and second temperature detection resistors RT1 and RT2 arranged on the membrane 22 are detected by voltage changes. For example, an external resistor RT3 is preferably a resistor that is disposed on, for example, the substrate portion 70 other than the stem 20, is not easily affected by the temperature and pressure of the fluid to be measured by the pressure sensor 10, and has a small change in the resistance value due to environmental changes. As with the other resistors, the external resistor RT3 may be disposed on the membrane 22. In this case, however, the external resistor RT3 is preferably made of a material different from that of the other resistors.

The circuit by the first temperature detection resistor RT1 and the second temperature detection resistor RT2 surrounded by the dotted line in FIG. 5 favorably functions as a temperature detection circuit excluding the change in the resistance value due to strain. As shown in FIG. 2, the first temperature detection resistor RT1 and the second temperature detection resistor RT2 are arranged in a region of the membrane 22 that is deformed by pressure. Thus, the individual resistance values of the first temperature detection resistor RT1 and the second temperature detection resistor RT2 are affected by the strain of the membrane 22 (i.e., the fluid pressure to be measured). Since the first temperature detection resistor RT1 and the second temperature detection resistor RT2 are arranged at positions that generate strain characteristics canceling each other (cancellation relation), however, the circuit of the pressure sensor 10 eliminates the influence of the strain and pressure of the membrane 22 and can detect the resistance change due to temperature by synthesizing the resistance values of the first temperature detection resistor RT1 and the second temperature detection resistor RT2.

FIG. 3 is a conceptual diagram illustrating a configuration example (first configuration example) of a circuit formed in the pressure sensor 10. FIG. 3A illustrates a connection state of the resistors R1-R4, RT1, and RT2 included in the first and second resistor groups 32 and 34, and FIG. 3B illustrates a circuit formed by the first and second resistor groups 32 and 34 in the connection state shown in FIG. 3A. In the first configuration example, as shown in FIG. 3A, the first electrode portion 42 and the first electrode portion 43 are connected. In addition, each of the first resistor R1 and the second resistor R2, the third resistor R3 and the fourth resistor R4, and the fourth resistor R4 and the first resistor R1 are connected by a conductor pattern on the membrane 22. As a result, the first to fourth resistors R1-R4 configure a bridge circuit for detecting strain as shown in FIG. 3B.

As shown in FIG. 3A, the first temperature detection resistor RT1 and the second temperature detection resistor RT2 are connected by a conductor pattern on the membrane 22. As a result, the first temperature detection resistor RT1 and the second temperature detection resistor RT2 are connected in series to form a circuit for detecting temperature as shown in FIG. 3B.

The bridge circuit by the first to fourth resistors R1-R4 shown in FIG. 3B and the circuit by the first and second temperature detection resistors RT1 and RT2 are wired to the substrate portion 70 shown in FIG. 1 via the first electrode portions 41, 42, and 43 and the second electrode portions 45 and 46. The circuit shown in FIG. 3B may form a circuit that branches from the common Vdd as shown in FIG. 5 or may form a circuit different from the example shown in FIG. 5.

The connections of the first electrode portions 42 and 43 shown in FIG. 3A and the formation of the connection wiring 82 shown in FIG. 1 are carried out using a method of, for example, wire bonding. In FIG. 3A, the connections of the electrode portions 42 and 43 are illustrated in a plane manner for easy explanation of the connections of the first and second electrode portions 41, 42, 43, 45, and 46, but the electrode portions 42 and 43 are preferably three-dimensionally connected on the membrane 22.

FIG. 4 is a conceptual diagram illustrating a configuration example (second configuration example) of a circuit formed in the pressure sensor 10. FIG. 4A illustrates a connection state of the resistors R1-R4, RT1, and RT2 included in the first and second resistor groups 32 and 34, and FIG. 4B illustrates a circuit formed by the first and second resistor groups 32 and 34 in the connection state shown in FIG. 4A. As shown in FIG. 4A, the second configuration example is different from the first configuration example shown in FIG. 3 in terms of the connection between the first electrode portion 41 and the second electrode portion 46 with the external resistor RT3 interposed therebetween, the connection between the first electrode portion 42 and the first electrode portion 43, and the connection between the first electrode portion 43 and the second electrode portion 45, but the other points are similar to those of the first configuration example shown in FIG. 3.

In the second configuration example shown in FIG. 4, the first to fourth resistors R1-R4 form a bridge circuit for detecting strain as shown in FIG. 4B, and the first temperature detection resistor RT1 and the second temperature detection resistor RT2 are connected in series to form a circuit for detecting temperature as shown in FIG. 4B. In the second configuration example shown in FIG. 4, a first-second wiring 60 connecting between the first and second electrode portions 42 and 43 connected to the first resistor group 32 and the second electrode portion 45 connected to the second resistor group 34 is formed. The first-second wiring 60 is formed on the membrane 22 by, for example, wire bonding.

The circuit shown in FIG. 4B is connected to, for example, a power supply or a voltmeter as shown in FIG. 5. As a result, the pressure sensor 10 can detect the pressure and the temperature in the connection state shown in the second configuration example. Unlike the first configuration example, since the first-second wiring 60 connected to the first resistor group 32 and the second resistor group 34 is formed in the second configuration example, the circuit as shown in FIG. 4B and FIG. 5 can easily be formed by simple wiring.

In the pressure sensor 10 according to First Embodiment described above, as shown in FIG. 2, the second resistor group 34 for detecting temperature includes the first temperature detection resistor RT1 disposed on the first circumference 24, which is the first strain position, and the second temperature detection resistor RT2 disposed on the second circumference 26, which is the second strain position. In such a pressure sensor 10, since the first temperature detection resistor RT1 and the second temperature detection resistor RT2 are arranged at positions that generate strain characteristics canceling each other, the first temperature detection resistor RT1 and the second temperature detection resistor RT2 are affected by the deformation of the membrane 22 with respect to individual changes in resistance value, but the change in resistance value excluding the influence of strain can be detected by connecting the first temperature detection resistor RT1 and the second temperature detection resistor RT2. Thus, the pressure sensor 10 can detect the temperature from the change in the resistance value of the second resistor group 34 and, if necessary, can correct the temperature for the output value from the first resistor group 32.

In the pressure sensor 10, the temperature conditions at the arrangement position of the first and second temperature detection resistors RT1 and RT2 are the same as or very close to those at the arrangement position of the first to fourth resistors R1-R4 for detecting the pressure. Thus, the pressure sensor 10 can accurately measure the temperature of the fluid to be measured for pressure with good responsiveness. Moreover, the pressure sensor 10 can accurately correct the temperature for the output of the first resistor group 32 relating to pressure using the detected temperature. Such a pressure sensor 10 is advantageous for miniaturization. This is because it is unnecessary to provide a region for disposing a resistor for temperature detection at a position near the periphery of the membrane 22.

As with the first to fourth resistors R1-R4 forming the bridge circuit, the first temperature detection resistor RT1 and the second temperature detection resistor RT2 for detecting the temperature are preferably arranged on the first circumference 24 and the second circumference 26, but the arrangement of the second resistor group 34 is not limited to this. That is, the first temperature detection resistor RT1 and the second temperature detection resistor RT2 only need to be in a positional relation in which the influence of strain can be removed from the change in resistance value by being connected to each other and may be arranged at a position other than the first circumference 24 or the second circumference 26 on the membrane 22.

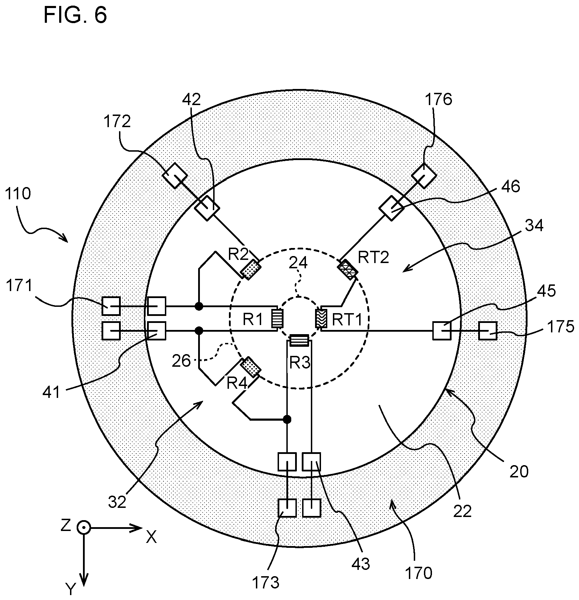

FIG. 6 is a conceptual diagram illustrating an arrangement of the first and second resistor groups 32 and 34, the first and second electrode portions 41-43, 45, and 46, and a substrate portion 170 in a pressure sensor 110 according to Second Embodiment of the present invention. The pressure sensor 110 according to Second Embodiment is different from the pressure sensor 10 according to First Embodiment in that all of the electrode portions 41-43, 45, and 46 on the membrane 22 are connected to the corresponding substrate electrode portions 171-173, 175, and 176 of the substrate portion 170, but the other points are similar to those of the pressure sensor 10 according to First Embodiment. In the description of the pressure sensor 110 according to Second Embodiment, only the differences from the pressure sensor 10 according to First Embodiment are described, and the common points are not described.

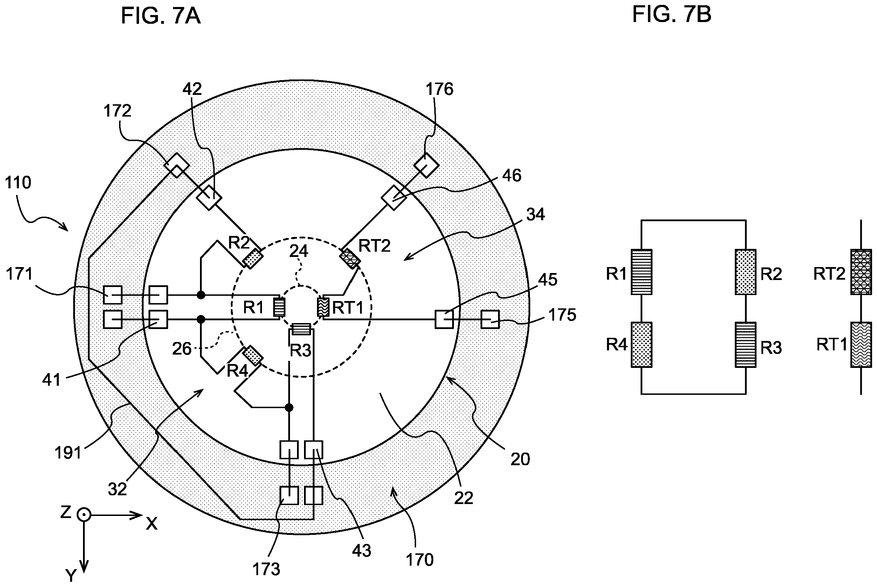

FIG. 7 is a conceptual diagram illustrating a configuration example (third configuration example) of a circuit formed in the pressure sensor 110. FIG. 7A illustrates a connection state of the resistors R1-R4, RT1, and RT2 included in the first and second resistor groups 32 and 34, and FIG. 7B illustrates a circuit formed by the first and second resistor groups 32 and 34 in the connection state shown in FIG. 7A. In the third configuration example, as shown in FIG. 7A, the first electrode portion 42 and the first electrode portion 43 are electrically connected by a substrate wiring 191 formed on the substrate portion 170 independent from the membrane 22. The other wirings are the same as those of the first configuration example shown in FIG. 3A.

The first to fourth resistors R1-R4 of the pressure sensor 110 shown in FIG. 7 form a bridge circuit for detecting strain as shown in FIG. 7B. The first temperature detection resistor RT1 and the second temperature detection resistor RT2 are connected in series to form a circuit for detecting temperature as shown in FIG. 7B.

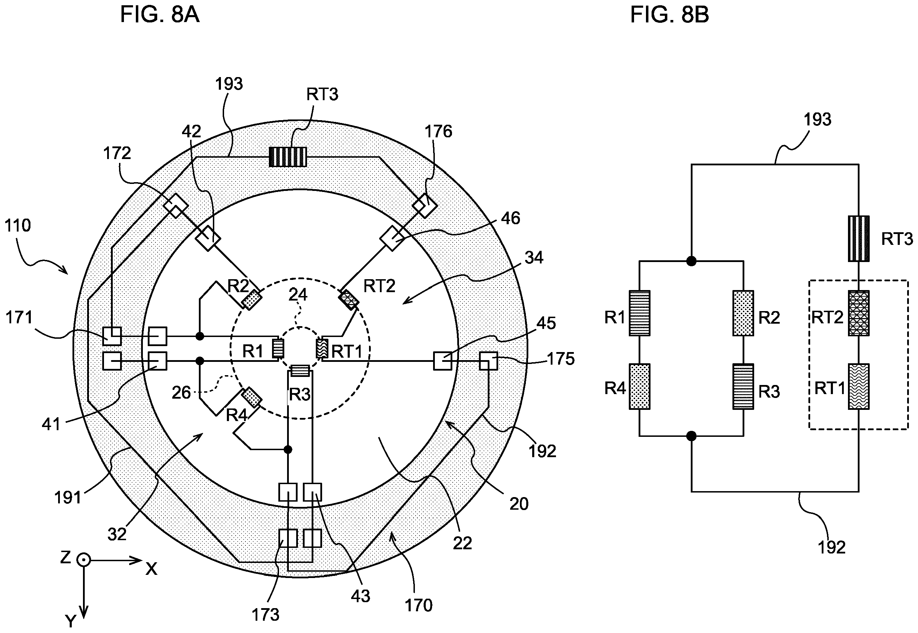

FIG. 8 is a conceptual diagram illustrating a configuration example (fourth configuration example) of a circuit formed in the pressure sensor 110. FIG. 8A illustrates a connection state of the resistors R1-R4, RT1, and RT2 included in the first and second resistor groups 32 and 34, and FIG. 8B illustrates a circuit formed by the first and second resistor groups 32 and 34 in the connection state shown in FIG. 8A. As shown in FIG. 8A, the fourth configuration example is different from the second configuration example shown in FIG. 4 in that the first electrode portion 41 and the second electrode portion 46 are connected via the external resistor RT3 and the substrate wiring 193 arranged on the substrate portion 170, and that the first resistor group 32 and the second resistor group 34 are connected via the board wirings 191 and 192 of the substrate portion 170, but the other points are the same as those of the second configuration example shown in FIG. 4.

In the fourth configuration example shown in FIG. 8, the first to fourth resistors R1-R4 form a bridge circuit for detecting strain as shown in FIG. 8B. In addition, the first temperature detection resistor RT1 and the second temperature detection resistor RT2 are connected in series to form a circuit for detecting temperature as shown in FIG. 8B.

In the pressure sensor 110 according to Second Embodiment shown in FIG. 6 to FIG. 8, the first and second electrode portions 41-43, 45, and 46 on the membrane 22 are not directly connected, and at least a part of the resistors R1-R4 are electrically connected via the substrate wirings 191-193 included in the substrate portion 170 to form a bridge circuit. Such a pressure sensor 110 is advantageous in productivity. This is because the wiring structure formed by, for example, wire bonding on the membrane 22 can be simplified. Moreover, the external resistor RT3 can be away from the pressure fluid by disposing the external resistor RT3 on the substrate portion 170. As for the common parts with the pressure sensor 10 according to First Embodiment, the pressure sensor 110 according to Second Embodiment exhibits the same effect as the pressure sensor 10 according to First Embodiment.

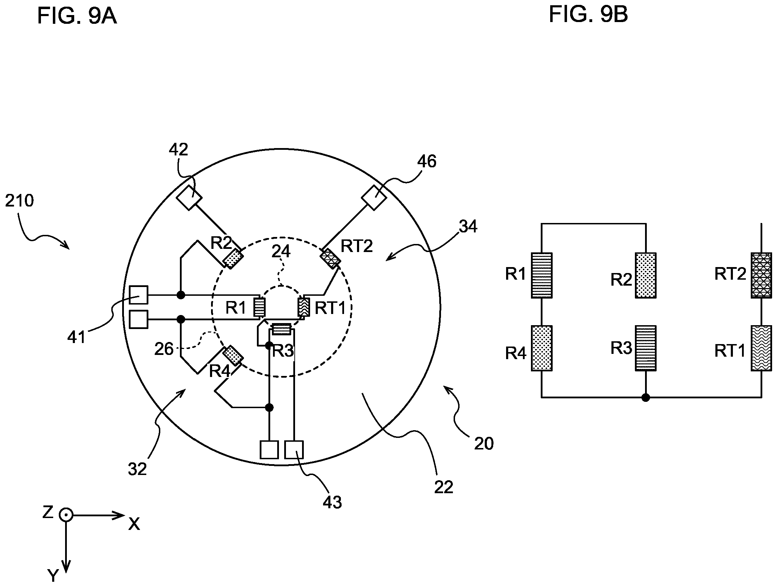

FIG. 9 is a conceptual diagram illustrating an arrangement of the first and second resistor groups 32 and 34 and the first and second electrode portions 41-43 and 46 in a pressure sensor 210 according to Third Embodiment of the present invention. FIG. 9A illustrates a connection state of the resistors R1-R4, RT1, and RT2 included in the first and second resistor groups 32 and 34, and FIG. 9B illustrates a circuit formed by the first and second resistor groups 32 and 34 in the connection state shown in FIG. 9A. The pressure sensor 210 according to Third Embodiment is different from the pressure sensor 10 according to First Embodiment in that an electrode portion (second electrode portion 45) connected to the first temperature detection resistor RT1 is not formed, but the other points are the same as those of the pressure sensor 10 shown in FIG. 2.

As shown in FIG. 9A, the first temperature detection resistor RT1 of the pressure sensor 210 is connected to the third resistor R3 and the fourth resistor R4 by a conductor pattern formed on the membrane 22. In the description of the pressure sensor 210 according to Third Embodiment, only the differences from the pressure sensor 10 according to First Embodiment are described, and the common points are not described.

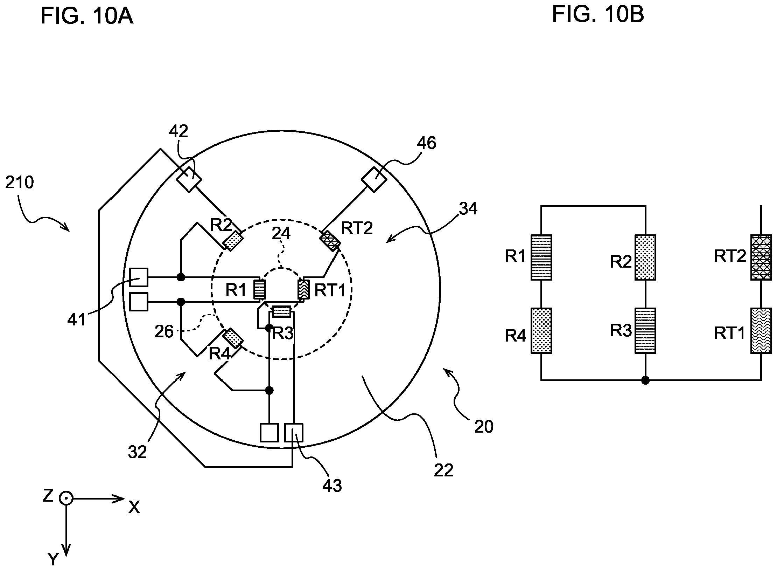

FIG. 10 is a conceptual diagram illustrating a configuration example (fifth configuration example) of a circuit formed in the pressure sensor 210. FIG. 10A illustrates a connection state of the resistors R1-R4, RT1, and RT2 included in the first and second resistor groups 32 and 34, and FIG. 10B illustrates a circuit formed by the first and second resistor groups 32 and 34 in the connection state shown in FIG. 10A. In the fifth configuration example, as shown in FIG. 10A, the first electrode portion 42 and the first electrode portion 43 are connected as in the first configuration example shown in FIG. 3A. As a result, the first to fourth resistors R1-R4 form a bridge circuit for detecting strain as shown in FIG. 10B.

The first temperature detection resistor RT1 and the second temperature detection resistor RT2 are connected in series as shown in FIG. 10B to form a circuit for detecting temperature. The circuit shown in FIG. 10B is connected to, for example, a power source as in the example shown in FIG. 5 and the first configuration example shown in FIG. 3B and detects pressure and temperature.

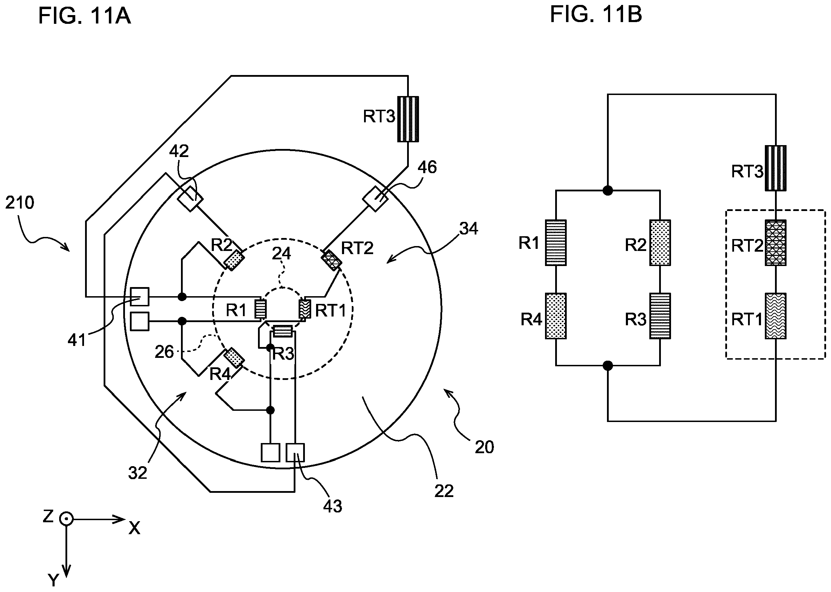

FIG. 11 is a conceptual diagram illustrating a configuration example (sixth configuration example) of a circuit formed in the pressure sensor 210. FIG. 11A illustrates a connection state of the resistors R1-R4, RT1, and RT2 included in the first and second resistor groups 32 and 34, and FIG. 11B illustrates a circuit formed by the first and second resistor groups 32 and 34 in the connection state shown in FIG. 11A. As shown in FIG. 11A, the sixth configuration example is different from the fifth configuration example shown in FIG. 10 in that the first electrode portion 41 and the second electrode portion 46 are connected with the external resistor RT3 interposed therebetween, but the other points are the same as those of the fifth configuration example shown in FIG. 10.

In the pressure sensor 210 according to Third Embodiment, the wiring method of the first to fourth resistors R1-R4 and the first and second temperature detection resistors RT1 and RT2 arranged on the membrane 22 is different from that in the pressure sensor 10 according to First Embodiment. As understood from the comparison between FIG. 3 and FIG. 10 or between FIG. 4 and FIG. 11, the resistors R1-R4, RT1, and RT2 may be connected by, for example, wire bonding via the electrode portions or may be connected by a conductor pattern on the membrane 22. The pressure sensor 210 according to Third Embodiment also exhibits the same effect as the pressure sensor 10 according to First Embodiment.

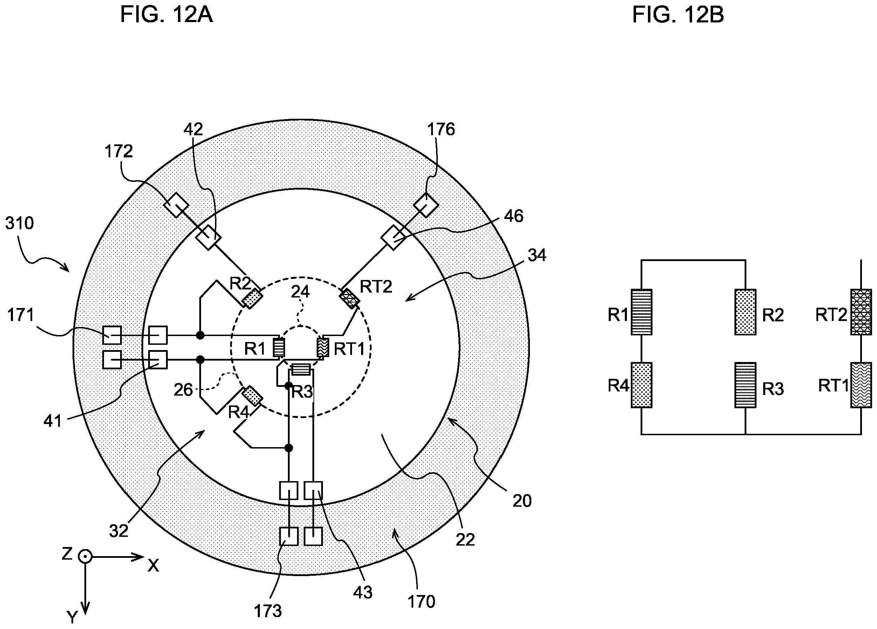

FIG. 12 is a conceptual diagram illustrating an arrangement of the first and second resistor groups 32 and 34 and the first and second electrode portions 41-43 and 46 in a pressure sensor 310 according to Fourth Embodiment of the present invention. FIG. 12A illustrates a connection state of the resistors R1-R4, RT1, and RT2 included in the first and second resistor groups 32 and 34, and FIG. 12B illustrates a circuit formed by the first and second resistor groups 32 and 34 in the connection state shown in FIG. 12A. The pressure sensor 310 according to Fourth Embodiment is different from the pressure sensor 110 according to Second Embodiment in that an electrode portion (second electrode portion 45) connected to the first temperature detection resistor RT1 is not formed, but the other points are the same as the pressure sensor 110 shown in FIG. 6.

As shown in FIG. 12A, the first temperature detection resistor RT1 of the pressure sensor 310 is connected to the third resistor R3 and the fourth resistor R4 by a conductor pattern formed on the membrane 22 as in Third Embodiment (see FIG. 9). In the description of the pressure sensor 310 according to Fourth Embodiment, only the differences from the pressure sensor 110 according to Second Embodiment are described, and the common points are not described.

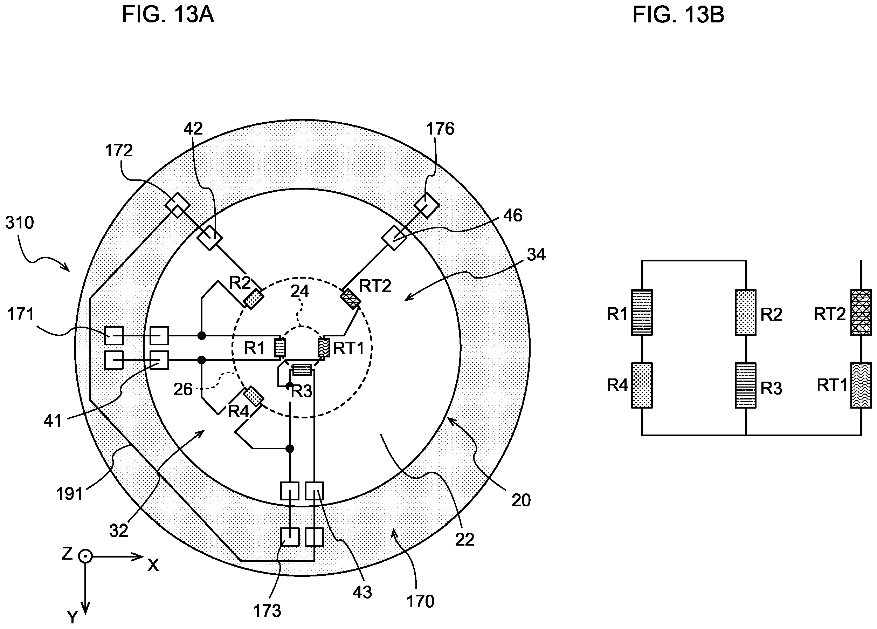

FIG. 13 is a conceptual diagram illustrating a configuration example (seventh configuration example) of a circuit formed in the pressure sensor 310. FIG. 13A illustrates a connection state of the resistors R1-R4, RT1, and RT2 included in the first and second resistor groups 32 and 34, and FIG. 13B illustrates a circuit formed by the first and second resistor groups 32 and 34 in the connection state shown in FIG. 13A. In the seventh configuration example, as shown in FIG. 13A, similarly to the third configuration example shown in FIG. 7A, the first electrode portion 42 and the first electrode portion 43 are electrically connected by the substrate wiring 191 formed on the substrate portion 170 independent from the membrane 22.

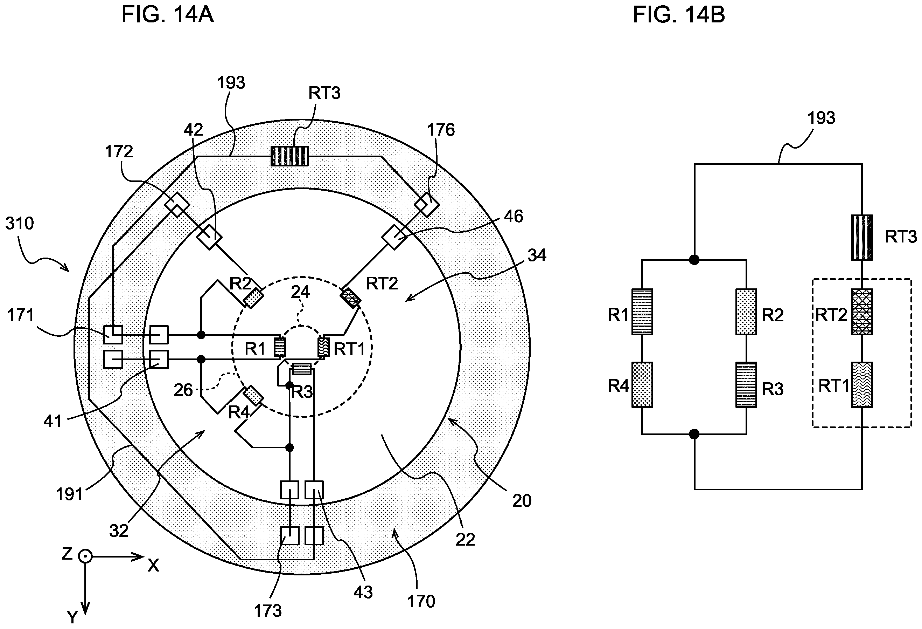

FIG. 14 is a conceptual diagram illustrating a configuration example (eighth configuration example) of a circuit formed in the pressure sensor 310. FIG. 14A illustrates a connection state of the resistors R1-R4, RT1, and RT2 included in the first and second resistor groups 32 and 34, and FIG. 14B illustrates a circuit formed by the first and second resistor groups 32 and 34 in the connection state shown in FIG. 14A. As shown in FIG. 14A, the eighth configuration example is different from the seventh configuration example shown in FIG. 13 in that the first electrode portion 41 and the second electrode portion 46 are connected via the external resistor RT3 and the substrate wiring 193 arranged on the substrate portion 170, but the other points are the same as the seventh configuration example shown in FIG. 13.

The pressure sensor 310 according to Fourth Embodiment is different from the pressure sensor 110 according to Second Embodiment in terms of the wiring method of the first to fourth resistors R1-R4 and the first and second temperature detection resistors RT1 and RT2 arranged on the membrane 22, but the pressure sensor 310 according to Fourth Embodiment also exhibits the same effect as the pressure sensor 110 according to Second Embodiment.

As described above, the pressure sensor according to the present invention is described with reference to embodiments, but the present invention is not limited to the embodiments and, needless to say, may include many other embodiments and modifications. For example, the shape and fixation structure of the stem 20 shown in FIG. 1 is only an example, and the pressure sensor of the present invention can adopt any other shapes and fixation structures in which the membrane is appropriately deformed according to pressure.

### Explanation of References

10, 110, 210, 310... pressure sensor
12... connection member
12a... screw groove
12b... passage
14... holding member
20... stem
22a... inner surface
22b... outer surface
22... membrane
24... first circumference
26... second circumference
32... first resistor group
34... second resistor group
R1... first resistor
R2... second resistor
R3... third resistor
R4... fourth resistor
RT1, RT2... temperature detection resistor
RT3... external resistor
41-43... first electrode portion
45, 46... second electrode portion
171-173, 175, 176... substrate electrode portion
191, 192, 193... substrate wiring
70, 170... substrate portion
60... first-second wiring

## Claims

1. A pressure sensor comprising:
a membrane configured to produce deformation corresponding to pressure;
a first resistor group including a first resistor and a third resistor arranged at a first strain position where a predetermined strain characteristic occurs on the membrane and a second resistor and a fourth resistor arranged at a second strain position where a strain characteristic different from that at the first strain position occurs and configured to detect strain by forming a bridge circuit, and
a second resistor group including a first temperature detection resistor disposed at the first strain position and a second temperature detection resistor disposed at the second strain position and configured to detect temperature.

2. A pressure sensor comprising:
a membrane configured to produce deformation corresponding to pressure;
a first resistor group disposed on the membrane and configured to form a bridge circuit; and
a second resistor group including a first temperature detection resistor disposed at a first strain position where a predetermined strain characteristic occurs in the membrane and a second temperature detection resistor disposed at a second strain position where a strain characteristic in a cancellation relation with the strain characteristic at the first strain position occurs and connected in series to the first temperature detection resistor.

3. The pressure sensor according to claim 2, wherein the first resistor group includes a first resistor and a third resistor arranged at the first strain position and a second resistor and a fourth resistor arranged at the second strain position.

4. The pressure sensor according to any of claim 1 to claim 3, comprising a substrate portion independent from the membrane,
wherein the resistors included in the first resistor group are electrically connected via a substrate wiring included in the substrate portion.

5. The pressure sensor according to any of claim 1 to claim 4, comprising:
a first electrode portion disposed on the membrane and connected to the first resistor group;
a second electrode portion disposed on the membrane and connected to the second resistor group; and
a wiring connecting between the first electrode portion and the second electrode portion.
